Europäisches Patentamt

European Patent Office

Office européen des brevets

(19)

(11) Veröffentlichungsnummer: **0 262 408 B1**

(12) # EUROPÄISCHE PATENTSCHRIFT

(45) Veröffentlichungstag der Patentschrift: **11.11.92**

(51) Int. Cl.5: **H01L 41/08**

(21) Anmeldenummer: **87112537.3**

(22) Anmeldetag: **28.08.87**

(54) **Piezoelektrisches Stellglied.**

(30) Priorität: **27.09.86 DE 3632694**

(43) Veröffentlichungstag der Anmeldung:
**06.04.88 Patentblatt 88/14**

(45) Bekanntmachung des Hinweises auf die
Patenterteilung:
**11.11.92 Patentblatt 92/46**

(84) Benannte Vertragsstaaten:
**DE FR GB IT**

(56) Entgegenhaltungen:
**DE-A- 2 238 407**
**US-A- 3 611 577**

**PATENT ABSTRACTS OF JAPAN, Band 10,
Nr. 347 (E-457)[2403], 21. November 1986; &
JP-A-61 148 886 (JAPAN STORAGE BATTERY
CO., LTD) 07-07-1986**

(73) Patentinhaber: **Physik Instrumente (PI) GmbH
& Co Produktions- & Marketing Kommanditgesellschaft
Siemenstrasse 13-15
W-7517 Waldbronn 1(DE)**

(72) Erfinder: **Marth, Harry, Dr. Dipl.-Ing.
Dobelweg 3
W-7517 Waldbronn 1(DE)**

(74) Vertreter: **Brommer, Hans Joachim, Dr.-Ing. et
al
Patentanwälte Dipl.-Ing. R. Lemcke Dr.-Ing.
H.J. Brommer Bismarckstrasse 16 Postfach
4026
W-7500 Karlsruhe 1(DE)**

## Beschreibung

Die Erfindung geht aus von einem piezoelektrischen Stellglied, bestehend aus einer Mikrometerschraube und einem damit kombinierten Piezotranslator, dessen durch Anlegen einer elektrischen Spannung erzeugte Längenänderung eine entsprechende Positionsänderung an der Spindel der Mikrometerschraube verursacht, wobei der Piezotranslator in ein Zwischenstück eingebaut ist, dessen dem einen Ende des Piezotranslators zugeordneter Bereich mit dem Gehäuse der Mikrometerschraube verbunden ist und dessen dem anderen Ende des Piezotranslators zugeordneter Bereich als Montagefuß zur Befestigung des Stellgliedes ausgebildet ist, wobei die beiden genannten Bereiche des Zwischenstückes durch eine zumindest annähernd in Meßrichtung der Mikrometerschraube verlaufende Geradführung miteinander verbunden sind.

Derartige piezoelektrische Stellglieder werden überall dort eingesetzt, wo eine manuelle Verstellung über mehrere Millimeter und gleichzeitig eine elektrische Positionsregelung im µ-Bereich erfolgen soll. Die Grobeinstellung erfolgt dabei nur durch die Mikrometerschraube, die Feineinstellung durch den Piezotranslator. Solche Stellglieder haben sich hervorragend zur Feineinstellung von Spiegeln, zur Maskenpositionierung in der Halbleiterindustrie, zum Positionieren von Lichtleitfasern und in vielen anderen Anwendungsgebieten bewährt, wo es nicht auf die Messung der Absolutposition eines Bauteiles, sondern auf dessen hochgenaue Positionierung oder Verstellung ankommt.

Ein Stellglied der eingangsbeschriebenen Art ist durch die US-A-3 611 577 bekanntgeworden. Dabei wird als Piezotranslator ein zylindrisches Teil verwendet, das die Spindel und den Montagefuß der Mikrometerschraube umgibt. Aufgrund dieser zylindrischen Ausbildung des Piezotranslators und der dadurch bedingten Sonderanfertigung erhöhen sich dessen Herstellungskosten beträchtlich; zugleich vergrößert sich auch der Platzbedarf für die Mikrometerschraube. Darüber hinaus ist die Montage der Mikrometerschraube über das den Piezotranslator aufnehmende Zwischenstück nicht mehr spielfrei, was bei Verstellbewegungen im µ-Bereich zu Ungenauigkeiten führt.

Hiervon ausgehend liegt die Aufgabe der vorliegenden Erfindung darin, das eingangs beschriebene piezoelektrische Stellglied dahingehend zu verbessern, daß es sich durch eine absolut spielfreie Verbindung zwischen dem ortsfesten Bereich und dem piezoelektrisch verstellbaren Bereich des Zwischenstückes auszeichnet. Desweiteren soll das Stellglied einen kompakten Aufbau aufweisen und wie bisher zur Kombination mit normalen Mikrometerschrauben mit sich drehender Spindel geeignet bleiben.

Diese Aufgabe wird erfindungsgemäß dadurch gelöst, daß die Geradführung als Feder-Parallelführung mit etwa senkrecht zur Meßrichtung verlaufenden Federstäben ausgebildet ist und daß der Piezotranslator an einem Federstab angreift.

Dadurch ist zunächst eine absolut spielfreie Verbindung zwischen dem ortsfesten Bereich und dem verstellbaren Bereich des Zwischenstückes gegeben. Darüber hinaus eröffnet sich die vorteilhafte Möglichkeit, die im µ-Bereich liegenden Längenänderungen des Piezoelementes durch eine interne Übersetzung innerhalb der Feder-Parallelführung auf wesentlich größere Hubbewegungen am Gehäuse der Mikrometerschraube zu verstärken. Zu diesem Zweck wird der Piezotranslator so eingebaut, daß er etwa im Mittelbereich des ihm zugeordneten Federstabes oder sogar nahe dessen Montagefußes angreift. Je weiter sein Angriffspunkt in die Nähe des Montagefußes verlegt wird, desto größer wird das Übesetzungsverhältnis, denn um so größer wird die Auslenkung am anderen Ende der Federstäbe, die mit dem Gehäuse der Mikrometerschraube verbunden sind.

Um Verkantungen während der piezoelektrisch erzeugten Verstellung auszuschließen, empfiehlt es sich, ein massives Zwischenstück zu verwenden und die Parallelführung, d. h. die Federstäbe, durch Querschlitze des Zwischenstückes zu bilden, die durch Funkenerosion hochgenau hergestellt werden können.

Der Piezotranslator selbst wird zweckmäßig in eine parallel zur Meßrichtung laufende Bohrung des Zwischenstückes eingebaut, also unmittelbar in das Zwischenstück integriert.

Es liegt im Rahmen der Erfindung, anstelle des beschriebenen Piezotranslators ein elektrostriktives oder magnetostriktives Element zu verwenden. Diese Elemente führen beim Anlegen einer elektrischen Spannung ebenfalls definierte Längenänderungen durch.

Weitere Merkmale der Erfindung ergeben sich aus der nachfolgenden Beschreibung eines Ausführungsbeispieles anhand der Zeichnung; dabei zeigt:

Fig. 1     eine Seitenansicht des erfindungsgemäßen Stellgliedes;

Fig. 2     ein Funktionsschema des gleichen Stellgliedes;

Fig. 3     einen Längsschnitt durch das Stellglied und

Fig. 4     eine Frontansicht in Richtung auf die Meßspindel.

Das piezoelektrische Stellglied besteht aus einer Mikrometerschraube 1, deren Gehäuse 1a (mitunter auch als Schaft bezeichnet) im verstellbaren Bereich 2 eines Zwischenstückes 3 fest verankert ist.

Die Mikrometerschraube 1 weist herkömmlichen Aufbau auf, nämlich eine verdrehbare Meßtrommel 1b, durch deren Verdrehung die Spindel 1c axial verstellt wird.

Das Zwischenstück 3 besteht aus dem bereits gennanten verstellbaren Bereich 2, der die Mikrometerschraube 1 trägt und aus einem demgegenüber elastisch verstellbaren Bereich 4, der als Montagefuß fungiert. Er ist zu diesem Zweck mit Anschlußbohrungen 4a und/oder mit einem zylindrischen Schaft 3a versehen, damit das komplette Stellglied leicht im Bereich des zu positionierenden Bauteiles montiert werden kann. Besonders günstig ist die Montage über den Schaft 3a, der in axialer Verlängerung des Gehäuses 1a der Mikrometerschraube angeordnet ist und von ihrer Spindel 1c durchquert wird, denn dadurch kann das Stellglied in derselben Bohrung montiert werden, in der vorher der Montageschaft einer herkömmlichen Mikrometerschraube befestigt war.

Die beiden Bereiche 2 und 4 des Zwischenstückes 3 sind durch Federstäbe 5 und 6 elastisch miteinander verbunden. Diese Federstäbe erstrekken sich senkrecht zur Meßrichtung der Mikrometerschraube und sind durch das Zwischenstück durchquerende Schlitze 5a, 5b und 6a, 6b hergestellt. So entsteht in Verbindung mit dem vom Schlitz 5b zum Schlitz 6a laufenden Horizontalschlitz 7 eine spielfreie Parallelführung zwischen den Bereichen 2 und 4.

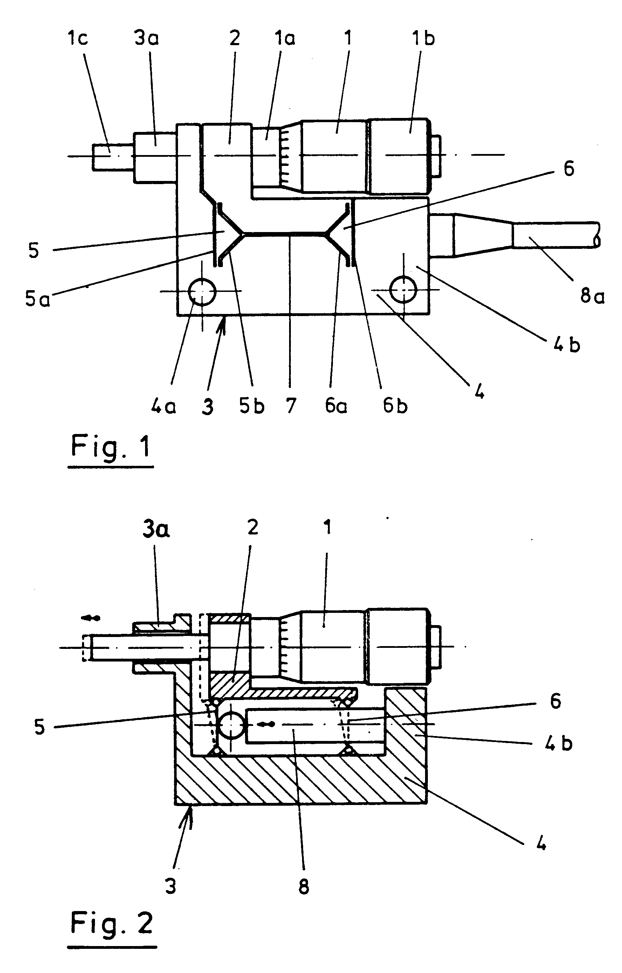

Die Funktion dieser Parallelführung wird durch Fig. 2 verdeutlicht. Dabei sind die beiden Federstäbe 5 und 6 als schwenkbar an die Bereiche 2 und 4 angelenkte Arme dargestellt und man erkennt das Prinzip der bekannten Parallelogrammführung.

Die Tatsache, daß diese Parallelogrammführung zu einer bogenförmigen Bewegung des Bereiches 2 relativ zum Bereich 4 führt, ist hier ohne Bedeutung, denn bei den im $\mu$m-Bereich liegenden Verstellwegen zwischen beiden Bereichen ist die Querkomponente der Verschiebebewegung vernachlässigbar.

Außerdem zeigt Fig. 2 den in Fig. 1 aus Übersichtlichkeitsgründen weggelassenen Piezotranslator 8. Er ist parallel zur Mikrometerschraube in das Zwischenstück 3 eingebaut, derart, daß er mit seinem einen Ende an einem vertikal hochstehenen Schenkel 4b des Bereiches 4, mit seinem anderen Ende an dem Federstab 5 anliegt. Wird er über die Anschlußleitung 8a mit einer bestimmten Spannung beaufschlagt, so daß er sich ausdehnt, so kommt es zu der erwünschten Feinverstellung des die Mikrometerschraube tragenden Bereiches 2.

Um die kleinen Stellwege des Piezotranslators 8 zu verstärken, greift er etwa im mittleren Bereich oder tiefer an dem Federstab 5 an. Es kommt dadurch zumindest zu einer Verdoppelung des Verstellweges der Mikrometerschraube gegenüber der Längenänderung des Piezotranslators.

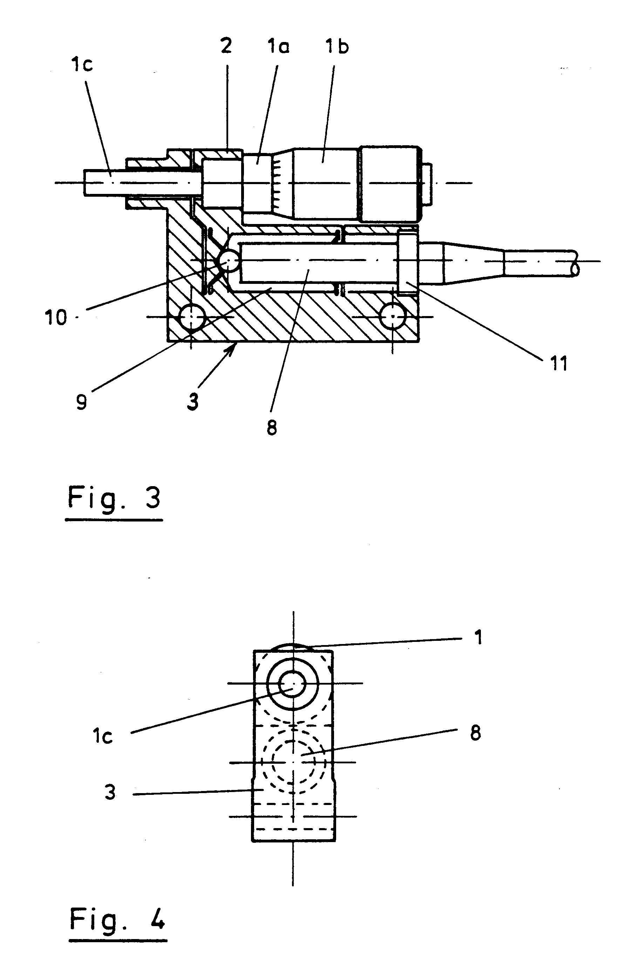

Fig. 3 zeigt den Einbau des Piezotranslators in einer Längsbohrung 9 des Zwischenstückes 3. Man erkennt, daß er über eine Kugel 10 an dem Federstab 5 angreift, während er sich an seinem anderen Ende über eine Verschlußschraube 11 an dem genannten Schenkel 4b des Bereiches 4 abstützt.

Wie Fig. 4 zeigt, ist der Piezotranslator vollständig in das Zwischenstück 3 integriert und somit allseits geschützt. Er kann in Stapel-, Streifen- oder Röhrchenbauweise oder Vielschichttechnik hergestellt sein. Ebenso kann der Translator aus einem elektrostriktiven oder magnetostriktiven Material bestehen.

**Patentansprüche**

1. Piezoelektrisches Stellglied, bestehend aus einer Mikrometerschraube (1) und einem damit kombinierten Piezotranslator (8), dessen durch Anlegen einer elektrischen Spannung erzeugte Längenänderung eine entsprechende Positionsänderung an der Spindel (1c) der Mikrometerschraube (1) verursacht, wobei der Piezotranslator (8) in ein Zwischenstück (3) eingebaut ist, dessen dem einen Ende des Piezotranslators (8) zugeordneter Bereich (2) mit dem Gehäuse (1a) der Miktrometerschraube (1) verbunden ist und dessen dem anderen Ende des Piezotranslators (8) zugeordneter Bereich (4) als Montagefuß zur Befestigung des Stellgliedes ausgebildet ist, wobei die beiden genannten Bereiche (2, 4) des Zwischenstückes (3) durch eine zumindest annähernd in Meßrichtung der Mikrometerschraube (1) verlaufende Geradführung (5, 6) miteinander verbunden sind,
dadurch gekennzeichnet,
daß die Geradführung (5, 6) als Feder-Parallelführung mit etwa senkrecht zur Meßrichtung verlaufenden Federstäben (5, 6) ausgebildet ist und daß der Piezotranslator (8) an einem Federstab (5) angreift.

2. Stellglied nach Anspruch 1,
dadurch gekennzeichnet,
daß die Feder-Parallelführung zwei Federstäbe (5, 6) aufweist.

3. Stellglied nach Anspruch 1 oder 2,
dadurch gekennzeichnet,
daß der Piezotranslator (8) im Mittelbereich des einen Federstabes (5) angreift.

4. Stellglied nach Anspruch 1 oder 2,
dadurch gekennzeichnet,
daß der Piezotranslator (8) nahe des Montagefußes (4) an dem Federstab (5) angreift.

**5.** Stellglied nach einem der vorhergehenden Ansprüchen,
dadurch gekennzeichnet,
daß das Zwischenstück (3) massiv ist und die Parallelführung (5, 6) durch erodierte Schlitze (5a, 5b, 6a, 6b und 7) gebildet ist.

**6.** Stellglied nach einem der vorhergehenden Ansprüche,
dadurch gekennzeichnet,
daß der dem genannten anderen Ende des Piezotranslators (8) zugeordnete, als Montagefuß fungierende Bereich (4) des Zwischenstükkes (3) mit einem Schaft (3a) versehen ist, der in axialer Verlängerung des Montageschaftes der Mikrometerschraube verläuft.

**7.** Stellglied nach einem der vorhergehenden Ansprüche,
dadurch gekennzeichnet,
daß der Piezotranslator (8) in eine parallel zur Meßrichtung laufende Bohrung (9) des Zwischenstückes (3) eingebaut ist.

**8.** Stellglied nach einem der vorhergehenden Ansprüche,
dadurch gekennzeichnet,
daß anstelle des Piezotranslators (8) ein elektrostriktives oder magnetostriktives Element eingebaut ist.

## Claims

**1.** A piezo-electric positioner, consisting of a micrometer screw (1) and a piezo-translator (8) combined therewith the length variation of which, produced by application of an electric voltage, causes corresponding change of position on the spindle (1c) of the micrometer screw (1), the piezo-translator (8) being mounted in an intermediate piece (3), the region (2) of the piece associated with the one end of the piezo-translator (8) is connected with the housing (1a) of the micrometer screw (1) and the region (4) of the piece associated with the other end of the piezo-translator (8) is formed as a mounting foot for securing the positioner, the two said regions (2, 4) of the intermediate piece (3) being connected with one another by a straight guide (5, 6) extending at least approximately in the measuring direction of the micrometer screw (1),
characterised in that:
the straight guide (5, 6) is formed as a sprung parallel guide with spring rods (5, 6) extending perpendicularly to the direction of measurement, and in that the piezo-translator (8) acts on one spring rod (5).

**2.** A positioner according to claim 1,
characterised in that:
the sprung parallel guide comprises two spring rods (5, 6).

**3.** A positioner according to claim 1 or 2,
characterised in that:
the piezo-translator (8) acts in the middle region of the one spring rod (5).

**4.** A positioner according to claim 1 or 2,
characterised in that:
the piezo-translator (8) acts on the spring rod (5) close to the mounting foot (4).

**5.** A positioner according to any one of the preceding claims,
characterised in that:
the intermediate piece (3) is solid and the parallel guide (5, 6) is formed by eroded slits (5a, 5b, 6a, 6b and 7).

**6.** A positioner according to any one of the preceding claims,
characterised in that:
the region (4) of the intermediate piece (3), associated with the said other end of the piezo-translator (8) and functioning as a mounting foot, is provided with a shank (3a) which extends as an axial extension of the mounting shaft of the micrometer screw.

**7.** A positioner according to any one of the preceding claims,
characterised in that:
the piezo-translator (8) is installed in a bore (9) of the intermediate piece (3) which runs parallel to the direction of measurement.

**8.** A positioner according to any one of the preceding claims,
characterised in that:
an electrostrictive or magnetostrictive element is mounted in place of the piezo-translator (8).

## Revendications

**1.** Organe de réglage piézoélectrique, constitué par une vis micrométrique (1) et un transducteur piézoélectrique (8), qui est combiné à la vis et dont la variation de longueur, qui est produite par application d'une tension électrique, provoque une modification correspondante de position sur la tige (1c) de la vis micrométrique (1), et dans lequel le transducteur piézoélectrique (8) est monté dans un élément intercalaire (3), dont la partie (2), qui est associée à une extrémité du transducteur piézoélectrique (8), est raccordée au boîtier (1a) de la vis micrométrique (1) et dont la partie (4), associée à l'autre extrémité du transducteur piézoélectrique (8), est agencée sous la forme d'un pied de montage pour la fixation de l'organe de réglage, et dans lequel lesdites deux parties (2,4) de l'élément intercalaire (3) sont réunies entre elles par un guide rectiligne (5,6), qui s'étend au moins approximativement dans la direction de mesure de la vis micrométrique (1),

caractérisé par le fait

que le guide rectiligne (5,6) est réalisé sous la forme d'un guide parallèle à ressort comportant des barres formant ressorts (5,6), qui s'étendent approximativement perpendiculairement à la direction de mesure et que le transducteur piézoélectrique (8) est accrochée à une barre formant ressort (5).

2. Organe de réglage selon la revendication 1, caractérisé en ce que le guide parallèle à ressorts comporte deux barres formant ressorts (5,6).

3. Organe de réglage selon la revendication 1 ou 2, caractérisé en ce que le transducteur piézoélectrique (8) est accrochée à la partie médiane d'une barre formant ressort (5).

4. Organe de réglage selon la revendication 1 ou 2, caractérisé en ce que le transducteur piézoélectrique (8) est accroché à la barre formant ressort (5) à proximité du pied de montage (4).

5. Organe de réglage selon l'une des revendications précédentes, caractérisé en ce que l'élément intercalaire (3) est massif et que le guide parallèle (5,6) est formé par des fentes érodées (5a,5b,6a,6b et 7).

6. Organe de réglage selon l'une des revendications précédentes, caractérisé en ce que la partie (4) de l'élément intercalaire (3), qui est associée à ladite autre extrémité du transducteur piézoélectrique (8) et sert de pied de montage, est pourvue d'un arbre (3a), qui s'étend dans le prolongement axial de l'arbre de montage de la vis micrométrique.

7. Organe de réglage selon l'une des revendications précédentes, caractérisé en ce que le transducteur piézoélectrique (8) est monté dans un perçage (9), qui est parallèle à la direction de la mesure, de l'élément intercalaire (3).

8. Organe de réglage selon l'une des revendications précédentes, caractérisé en ce qu'un élément électrostrictif ou magnétostrictif est monté à la place du transducteur piézoélectrique (8).

1c  3a  2  1a  1  1b

5

5a

6

8a

4b

4a  3  5b  7  6a  6b  4

## Fig. 1

3a  2  1

5

6

4b

4

3  8

## Fig. 2

Fig. 3

Fig. 4